(19) Europäisches Patentamt

European Patent Office

Office européen des brevets

(11) **EP 1 079 164 A1**

(12) **EUROPÄISCHE PATENTANMELDUNG**

(43) Veröffentlichungstag:
    **28.02.2001 Patentblatt 2001/09**

(51) Int. Cl.⁷: **F16L 33/04, F16L 21/06**

(21) Anmeldenummer: **00111456.0**

(22) Anmeldetag: **27.05.2000**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **20.08.1999 DE 19939562**

(71) Anmelder: **Rasmussen GmbH**
    **D-63477 Maintal (DE)**

(72) Erfinder:
    • **Hauke, Michael**
      **63607 Wächtersbach (DE)**
    • **Böhrer, Robert**
      **63486 Bruchköbel (DE)**

(74) Vertreter:
    **Knoblauch, Andreas, Dr.-Ing. et al**
    **Schlosserstrasse 23**
    **60322 Frankfurt (DE)**

(54) **Spannbare Schelle**

(57)    Eine spannbare Schelle hat ein C-förmiges Schellenband (1), auf dessen Enden je eine Spannbacke (2) aufgeschweißt ist. Jede Spannbacke (2) begrenzt eine Öffnung (9) zur Durchführung des Schaftes (6) einer Spannschraube (4), deren Kopf (5) und Mutter (7) im gespannten Zustand der Schelle jeweils an einer der einander abgekehrten Seiten der Spannbacken (2) anliegen. Die Öffnung (9) wenigstens der einen Spannbacke (2) ist nach innen offen. Um wesentliche Bauteile der Schelle sowohl zur Herstellung einer Steckkupplung als auch einer Befestigungsschelle verwenden zu können und die Montage der Schelle an der Einbaustelle zu vereinfachen, hat das Schellenband (1) unter der nach innen offenen Öffnung (9) einen Durchbruch (10), der sich vom einen Ende des Schellenbandes (1) in Umfangsrichtung der Schelle um wenigstens den Betrag der in Axialrichtung der Spannschraube (4) gemessenen Länge ($L_K$, $L_M$) des Spannschraubenkopfes (5) oder der Mutter (7) über die in Umfangrichtung der Schelle gemessene Dicke (D) der die nach innen offene Öffnung (9) aufweisenden Spannbacke (2) hinaus erstreckt und eine Breite (B) aufweist, die eine Durchführung des Kopfes (5) oder der Mutter (7) gestattet.

Fig.2

EP 1 079 164 A1

**Beschreibung**

Die Erfindung bezieht sich auf eine spannbare Schelle mit einem etwa C-förmigen Schellenband, auf dessen Enden je eine radial nach außen ragende Spannbacke aufgeschweißt ist, die eine Öffnung zur Durchführung des Schaftes einer Spannschraube begrenzt, deren Kopf und Mutter im gespannten Zustand der Schelle jeweils an einer der einander abgekehrten Seiten der Spannbacken anliegen, wobei die Öffnung wenigstens der einen Spannbacke radial nach innen offen ist.

Eine Schelle dieser Art ist beispielsweise aus der DE 34 04 739 C1 oder der DE 33 39 169 C2 bekannt. Üblicherweise wird diese Schelle als Steckkupplung zum Verbinden der Enden zweier Rohre verwendet und zur Abdichtung der Verbindung auf ihrer Innenseite mit einer einen geschlossenen Ring bildenden Gummimuffe versehen. Die Spannbacken werden aus separaten Blechen geformt, um sie möglichst steif ausbilden zu können. Um die wesentlichen Teile dieser Schelle in größeren Stückzahlen herstellen zu können, ist man bestrebt, die gleichen

Teile auch zur Herstellung von Befestigungsschellen , wie sie beispielsweise aus der DE 35 22 497 C1 bekannt sind, verwenden zu können. Eine Befestigungsschelle wird jedoch in der Regel in der Weise an dem zu befestigenden Rohr montiert, daß sie unter Aufweitung des Spaltes zwischen den Spannbandenden radial auf das Rohr oder dergleichen aufgesetzt wird. Zu diesem Zweck müßte man bei einer Steckkupplung der eingangs genannten Art bei vormontierter Schraube und Mutter letztere von der Spannschraube trennen, was den Arbeitsaufwand bei der Montage an der Einbaustelle erhöht.

Der Erfindung liegt die Aufgabe zugrunde, eine Schelle der eingangs genannten Art anzugeben, deren Hauptbauteile sowohl zur Herstellung einer Steckkupplung der eingangs genannten Art als auch zur Herstellung einer Befestigungsschelle geeignet sind, ohne an der Einbaustelle den Montageaufwand zu erhöhen.

Erfindungsgemäß ist diese Aufgabe dadurch gelöst, daß das Schellenband unter der radial nach innen offenen Öffnung einen Durchbruch aufweist, der sich von dem einen Ende des Schellenbandes in Umfangsrichtung der Schelle um wenigstens den Betrag der in Axialrichtung der Spannschraube gemessenen Länge des Spannschraubenkopfes oder der Mutter über die in Umfangsrichtung der Schelle gemessene Dicke der die radial nach innen offene Öffnung aufweisenden Spannbacke hinaus erstreckt und eine Breite aufweist, die eine Durchführung des Kopfes oder der auf den Schaft geschraubten Mutter gestattet.

Bei dieser Lesung können das Spannband, die Spannbacken, die Spannschraube und die Mutter unverändert sowohl für eine Steckkupplung als auch für eine Befestigungsschelle verwendet werden. Um sie als Steckkupplung zu verwenden, braucht lediglich die Dichtungsmuffe eingelegt zu werden. Für eine Verwendung als Befestigungsschelle genügt es, zusätzlich eine Mutter, Gewindebuchse oder dergleichen am Schellenband zu befestigen, in die dann ein Aufhängebolzen eingeschraubt werden kann. Die Spannschraube und die Mutter können in beiden Fällen werksseitig vormontiert werden, ohne daß sie zur Montage an der Einbaustelle getrennt werden müßten. Im Falle der Befestigungsschelle kann die einen geschlossenen Ring bildende Gummimuffe entfallen oder zur Schalldämpfung durch eine im Bereich des Spalts zwischen den Spannbacken unterbrochene Gummiauskleidung ersetzt werden. Diese Schelle läßt sich dann zwischen den Schellenbandenden aufweiten und radial auf den einzuspannenden und mittels der Schelle an einer Wand oder dergleichen zu befestigenden Gegenstand aufsetzen. Hierbei kann die einschließlich Mutter vormontierte Spannschraube mit dem Kopf oder der Mutter, ohne letztere zu lösen, durch den Durchbruch hindurch radial nach innen geschwenkt werden, so daß der Kopf oder die Mutter mit der entsprechenden Spannbacke außer Eingriff gelangt. In gleicher Weise kann die vormontierte Spannschraube nach dem Aufsetzen der Schelle auf den Gegenstand wieder in umgekehrter Richtung in der Spannbacke eingehängt werden.

Vorzugsweise ist dafür gesorgt, daß das Schellenband wenigstens ein Gelenk aufweist, das ein Aufweiten der geöffneten Schelle bis zu einem Abstand der Schellenbandenden gestattet, der wenigstens der Dicke des in der Schelle einzuspannenden Gegenstands entspricht. Diese Ausbildung erleichtert das Aufweiten der Schelle, um sie auf dem einzuspannenden Gegenstand aufzusetzen.

Ferner kann das Schellenband an seinen Umfangsseiten nach innen umgebogene Flansche aufweisen, die im Bereich des Gelenks oder der Gelenke unterbrochen sind.

Diese Flansche sind bei einer Steckkupplung vorteilhaft, zum einen, um eine Gummimuffe zur Abdichtung axial gesichert zwischen den Flanschen aufzunehmen, und zum andere, um die Flansche mit ihren radial inneren Kanten fest am Umfang der in die Steckkupplung eingeführten, zu verbindenden Rohrenden angreifen zu lassen und dadurch die Belastbarkeit der Verbindung zu erhöhen. Gleichzeitig bleibt das Schellenband zur Anwendung der Schelle als Befestigungsschelle im Bereich der Unterbrechungen der Flansche gelenkig oder biegsam, um die Schelle leicht aufweiten zu können, bevor sie auf den einzuspannenden Gegenstand radial aufgesetzt wird.

So dann ist es günstig, wenn jede Spannbacke aus einem Blechstreifen gebildet ist, der sich etwa quer zum Schellenband erstreckt, mit seiner einen Breitseite dem Schellenband zugekehrt ist, durch eine radial nach außen gerichtete Wölbung die Öffnung begrenzt und an den Flanschen sowie zwischen der Wölbung und den Flanschen am Schellenband angeschweißt ist. Eine Schelle mit derartigen Spannbacken ist mit einem hohen Drehmoment der Spannschraube belastbar, um hohe Spannkräfte ohne die Gefahr einer Verbiegung der Spannbacken auszuüben.

Die Erfindung und ihre Weiterbildungen werden nachstehend anhand der beigefügten Zeichnungen eines bevorzugten Ausführungsbeispiels näher beschrieben. Es zeigen:

Fig. 1 eine Seitenansicht einer erfindungsgemäßen Schelle,

Fig. 2 eine Draufsicht der Schelle nach Fig. 1,

Fig. 3 eine Seitenansicht der Schelle nach Fig. 1 in Längsrichtung ihrer Spannschraube,

Fig. 4 eine Seitenansicht der Schelle nach Fig. 1 während der Durchführung des Spannschraubenkopfes durch einen Durchbruch im einem Endabschnitt des Schellenbandes und eine Spannbacke und

Fig. 5 den Ausschnitt X der Fig. 4, teilweise im Schnitt.

Die dargestellte Schelle besteht aus einem etwa C-förmigen Schellenband 1, zwei Spannbacken 2, die jeweils auf den Enden des Schellenbands 1 durch Punktschweißungen 3 aufgeschweißt sind, einer Spannschraube 4 mit einem zylindrischen Kopf 5, der einen Innenmehrkant aufweist, und einer auf den Gewindeschaft 6 der Spannschraube 4 aufgeschraubten mehrkantigen Mutter 7, sowie aus einer am Schellenband 1 befestigten mehrkantigen Mutter 8 zum einschrauben einer nicht dargestellten Gewindestange, mittels der die Schelle an der Wand oder Decke eines Gebäudes befestigt wird, nachdem in der Schelle ein Gegenstand, im allgemeinen ein Rohr oder dergleichen, eingespannt worden ist.

Die Spannbacken 2 begrenzen jeweils eine Öffnung 9 zur Durchführung des Schaftes 6 der Spannschraube 4, deren Kopf 4 und Mutter 7 im gespannten Zustand der Schelle jeweils an einer der voneinander abgekehrten Seiten der Spannbacken 2 anliegen. Die von den Spannbacken 2 begrenzten Öffnungen 9 sind radial nach innen offen, d.h. die Spannbacken 2 bilden keine über den gesamten Umfang geschlossene Öffnung 9. Vielmehr sind die Öffnungen 3 im Querschnitt etwa umgekehrt U-förmig. Das Schellenband 1 hat unter der Öffnung 9 der einen Spannbacke 2 einen Durchbruch 10, der sich von dem einen Ende des Schellenbandes 1 in Umfangsrichtung der Schelle um wenigstens den Betrag der in Axialrichtung der Spannschraube 4 gemessenen Länge $L_K$ des Spannschraubenkopfes 5 oder der Länge $L_M$ der Mutter 7 über die in Umfangsrichtung der Schelle gemessene Dicke D der über dem Durchbruch 10 liegenden Spannbacke 2 hinaus erstreckt und eine Breite B aufweist, die eine Durchführung des Kopfes 5 oder der auf den Schaft 6 geschraubten Mutter 7 gestattet. Das heißt, die Länge L des Durchbruchs 10 in Umfangsrichtung der Schelle ist wenigstens gleich der Summe aus der Länge $L_K$ des Spannschraubenkopfes 5 und der Dicke D der Spannbacke oder wenigstens gleich der Summe aus der Länge $L_M$ der Mutter 7 und der Dicke D der Spannbacke 2. Im vorliegenden Beispiel ist die Länge L des Durchbruchs 10 größer als die Summe aus der Länge $L_K$ und der Dicke D, also $L > L_K + D$.

Das Schellenband 1 hat an seinen Umfangsseiten nach innen umgebogene Flansche 11, die im Bereich eines Gelenks 12 unterbrochen sind. Das Gelenk 12 liegt der Spannschraube diametral in bezug auf die Mitte der geschlossenen Schelle gegenüber und gestattet ein Aufweiten der geöffneten Schelle bis zu einem Abstand der Schellenbandenden, der wenigstens der Dicke des in der Schelle einzuspannenden Gegenstands, eines Rohres oder dergleichen, entspricht.

Die Spannbacken 2 sind jeweils aus einem Bleichstreifen gebildet, der sich etwa quer zum Schellenband 1 erstreckt und mit seiner einen Breitseite dem Schellenband 1 zugekehrt ist. Eine radial nach außen gerichtete Wölbung 13 des Blechstreifens beziehungsweise der Spannbacke 2 begrenzt die Öffnung 9 der betreffenden Spannbacke 2. Der Blechstreifen ist zwischen der Wölbung 13 und den Flanschen 11 am Schellenband 1 sowie an den Flanschen 11 durch die Punktschweißungen 3 angeschweißt.

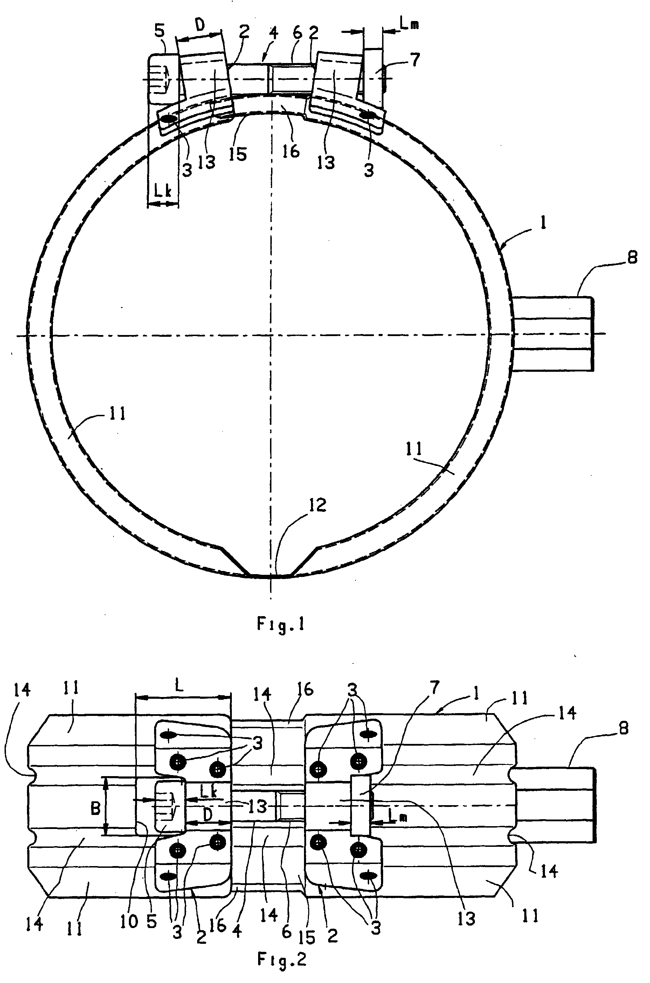

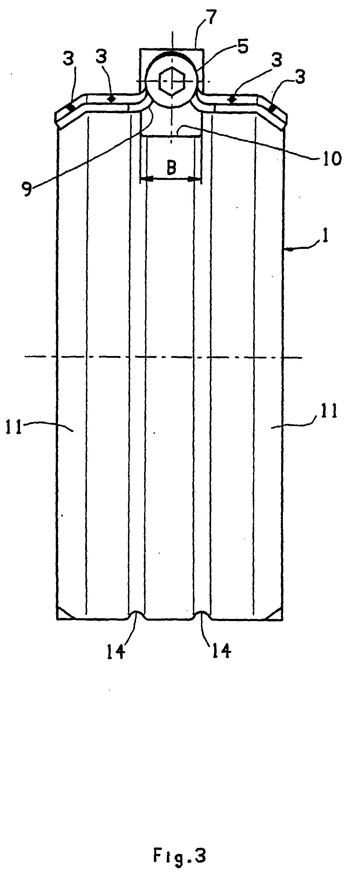

Das Schellenband 1 hat ferner zwei parallele, in Umfangsrichtung der Schelle umlaufende Sicken 14 (siehe Fig. 2 und 3), die die Steifigkeit des Schellenbandes 1 ebenso wie die Flansche 11 erhöhen.

Ferner ist der nicht mit dem Durchbruch versehene Endabschnitt des Schellenbandes 1 mit einer radial nach innen um die Dicke des Schellenbandes 1 versetzten Lasche 15 versehen, die den Spalt zwischen den Spannbacken 2 überbrückt und ebenso wie der übrige Teil des Schellenbandes 1 mit den Sicken 14, jedoch etwas schmaleren Flanschen 16, versehen ist. Die Lasche 15 kann daher beim Schließen der Schelle unter den in den Fig. 1 und 2 links dargestellten Endabschnitt des Schellenbandes 1 eingeführt werden. Dabei greifen die in dem über der Lasche 15 liegenden Endabschnitt des Schellenbande 1 ausgebildeten Sicken 14 in die Sicken 14 der Lasche 15 ein. Alternativ kann die Lasche 15 auch separat ausgebildet und an der Innenseite des in den Fig. 1 und 2 rechts liegenden Endabschnitts des Schellenbandes 1 durch Punktschweißungen angeschweißt sein.

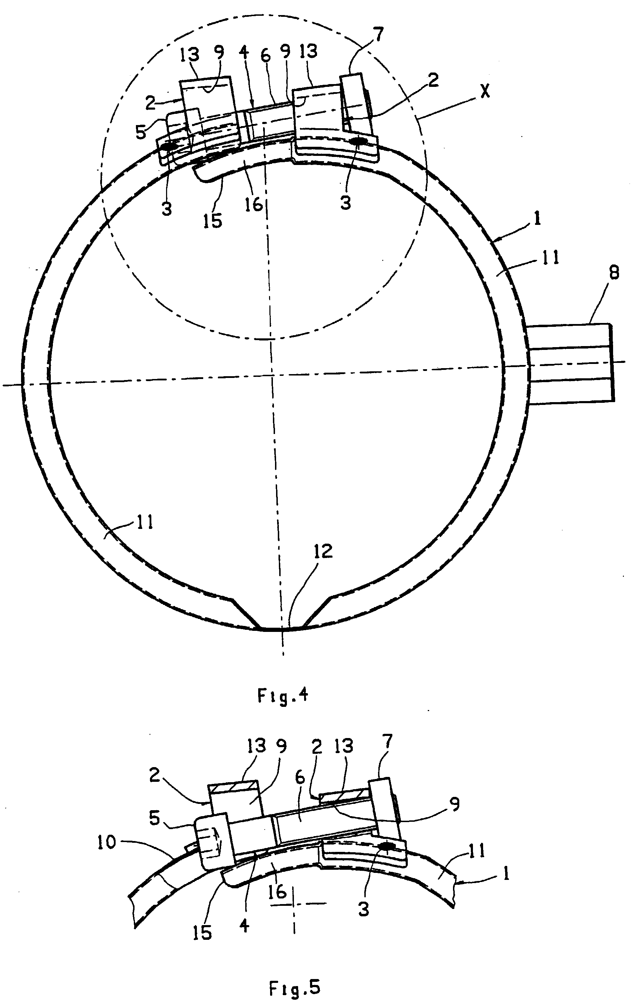

Um die Schelle zur Befestigung eines rohrförmigen Gegenstands oder dergleichen, beispielsweise an einer Decke oder Wand eines Gebäudes, zu verwenden, kann die fabrikseitig in dem vormontierten Zustand gemäß den Fig. 1 bis 3 an der Einbaustelle angelieferte Schelle auf einfache Weise zunächst dadurch - ohne die Mutter 7 von der Spannschraube 4 zu entfernen - geöffnet werden, daß der in den Fig. 1 und 2 rechte Endabschnitt des Schellenbandes 1, einschließlich der Lasche 15, so weit radial nach innen gebogen wird, bis der Spannschraubenkopf 5 innerhalb des Durchbruchs 10 liegt, wie es in den Fig. 4 und 5 dargestellt ist, und anschließend das Schellenband 1 um das Gelenk 7 so weit, unter Hindurchführung des Spannschraubenkopfes 5 durch den Durchbruch 10 und die Öffnung 9 der in den Fig. 4 und 5 links dargestellten Spannbacke 2, aufgebogen wird, bis die Öffnungsweite dem Durchmesser des zu befestigenden rohrförmigen Gegenstands entspricht. Anschließend kann die Schelle in dem geöffneten Zustand radial auf dem rohrförmigen Gegenstand aufgesetzt und in umgekehrter Weise geschlossen werden, wobei dann die Spannschraube 4 wieder die in den Fig. 1 bis 3 dargestellte Lage einnimmt. Nach dem Spannen der Spannschraube 4 kann die Schelle über die Mutter 8 und die nicht dargestellte Gewindestange mit der Wand oder Decke des Gebäudes verbunden werden.

Bei dieser Montage muß mithin die Mutter 7 nicht von der Schraube 4 entfernt werden. Beim Transport bleiben alle Teile im vormontierten Zustand gemäß den Fig. 1 und 3 miteinander verbunden, so daß die Spannschraube 7 und die Mutter 4 nicht verlorengehen.

Natürlich kann der einzuspannende rohrförmige Gegenstand auch in dem vormontierten Zustand gemäß den Fig. 1 und 3 und nach der Befestigung der Schelle an der Wand oder Decke eines Gebäudes axial in die geschlossene Schelle eingeführt werden, wenn die Platzverhältnisse an der Einbaustelle dies gestatten.

Zusätzlich kann die Befestigungsschelle an ihrer Innenseite auch mit einer umlaufenden oder im Bereich des Spaltes zwischen den Spannbacken 2 unterbrochenen Gummimuffe zur Schalldämmung versehen sein, wobei die ununterbrochene Gummimuffe dann verwendet wird, wenn der einzuspannende rohrförmige Gegenstand axial in die Schelle eingeführt werden kann.

Die dargestellte Schelle kann jedoch auch als Steckkupplung verwendet werden, wobei sie dann wiederum mit einer ringsum geschlossenen Gummimuffe zur Abdichtung der Stoßstelle der durch die Schelle verbundenen, axial in sie eingeführten Enden zweier Rohre versehen wird. Hierbei kann die Mutter 8 an der Schelle verbleiben. Die Mutter 8 kann aber auch zur Verwendung der Schelle als Steckkupplung entfallen. In jedem Falle sind die wesentlichen Bauteile der Schelle für beide Verwendungsarten, das heißt als Befestigungsschelle oder als Steckkupplung, die gleichen. Diese Bauteile können daher in größeren Stückzahlen und damit kostengünstiger als bei nur einer Verwendungsart hergestellt werden.

Abwandlungen der dargestellten Schelle können beispielsweise darin bestehen, daß die Spannschraube 4 umgekehrt als in den Zeichnungen dargestellt in die Spannbacken 2 eingeführt und mithin die Mutter 7 durch den Durchbruch 10 beim Öffnen und Schließen der Schelle hindurchgeführt wird, ohne die Mutter 7 von der Spannschraube 4 zu entfernen. In diesem Fall braucht mithin der Durchbruch 10 in Umfangsrichtung nicht so lang wie im dargestellten Fall ausgebildet zu sein, so daß gilt: $L > D + L_M$.

Ferner können anstelle des Gelenks 12 zwei um 90°, jeweils entgegen und im Uhrzeigersinn versetzt gegenüber dem Gelenk 12 angeordnete Gelenke durch entsprechende Unterbrechungen der Flansche 11 ausgebildet sein.

Sodann können die Spannbacken 12 aus lediglich abgewinkelten Blechen bestehen, wenn geringere Spannkräfte gefordert werden.

**Patentansprüche**

1. Spannbare Schelle mit einem etwa C-förmigen Schellenband (1), auf dessen Enden je eine radial nach außen ragende Spannbacke (2) aufgeschweißt ist, die eine Öffnung (9) zur Durchführung des Schaftes (6) einer Spannschraube (4) begrenzt, deren Kopf (5) und Mutter (7) im gespannten Zustand der Schelle jeweils an einer der einander abgekehrten Seiten der Spannbacken (2) anliegen, wobei die Öffnung (9) wenigstens der einen Spannbacke (2) radial nach innen offen ist, dadurch gekennzeichnet, daß das Schellenband (1) unter der radial nach innen offenen Öffnung (9) einen Durchbruch (10) aufweist, der sich von dem einen Ende des Schellenbandes (1) in Umfangsrichtung der Schelle um wenigstens den Betrag der in Axialrichtung der Spannschraube (4) gemessenen Länge ($L_K$, $L_M$) des Spannschraubenkopfes (5) oder der Mutter (7) über die in Umfangsrichtung der Schelle gemessene Dicke (D) der die radial nach innen offene Öffnung (9) aufweisenden Spannbacke (2) hinaus erstreckt und eine Breite (B) aufweist, die eine Durchführung des Kopfes (5) oder der auf den Schaft (6) geschraubten Mutter (7) gestattet.

2. Schelle nach Anspruch 1, dadurch gekennzeichnet, daß das Schellenband wenigstens ein Gelenk (12) aufweist, das ein Aufweiten der geöffneten Schelle bis zu einem Abstand der Schellenbandenden gestattet, der wenigstens der Dicke des in der Schelle einzuspannenden Gegenstands entspricht.

3. Schelle nach Anspruch 2, dadurch gekennzeichnet, daß das Schellenband (1) an seinen Umfangsseiten nach innen umgebogene Flansche (11) aufweist, die im Bereich des Gelenks (12) oder der Gelenke unterbrochen sind.

4. Schelle nach Anspruch 3, dadurch gekennzeichnet, daß jede Spannbacke (2) aus einem Blechstreifen gebildet ist, der sich etwa quer zum Schellenband (1) erstreckt, mit seiner einen Breitseite dem Schellenband (1) zugekehrt ist, durch eine radial nach außen gerichtete Wölbung (13) die Öffnung (9) begrenzt und an den Flanschen (11) sowie zwischen der Wölbung (13) und den Flanschen (11) am Schellenband (1) angeschweißt ist.

Fig.1

Fig.2

Fig.3

Fig.4

Fig.5

Europäisches
Patentamt

**EUROPÄISCHER RECHERCHENBERICHT**

Nummer der Anmeldung

EP 00 11 1456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 3 807 003 A (LENTZ G) 30. April 1974 (1974-04-30) * Zusammenfassung * * Abbildungen 1-4 * | 1,3,4 | F16L33/04 F16L21/06 |
| A | EP 0 779 463 A (MAGE AG) 18. Juni 1997 (1997-06-18) * Zusammenfassung * * Abbildungen 3,4 * | 1,3,4 | |
| A | US 5 842 725 A (ALLERT KURT) 1. Dezember 1998 (1998-12-01) * Zusammenfassung * * Abbildungen 1,2 * | 1,2 | |
| A | US 2 899 733 A (SVEN AXEL SUNDBERG) 18. August 1959 (1959-08-18) * Spalte 2, Zeile 43 - Zeile 60 * * Abbildung 3 * | 1,2 | |
| A | EP 0 787 938 A (EMERSON & CUMING COMPOSITE MAT) 6. August 1997 (1997-08-06) * Abbildungen 1,2 * | 1,2 | RECHERCHIERTE SACHGEBIETE (Int.Cl.7) F16L |
| A | US 2 368 929 A (JAMES T. KING) 6. Februar 1945 (1945-02-06) * Abbildung 1 * | 1 | |

Der vorliegende Recherchenbericht wurde für alle Patentansprüche erstellt

| Recherchenort | Abschlußdatum der Recherche | Prüfer |
|---|---|---|
| BERLIN | 31. Oktober 2000 | Schaeffler, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 00 11 1456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2000

| Im Recherchenbericht angeführtes Patentdokument | Datum der Veröffentlichung | Mitglied(er) der Patentfamilie | | Datum der Veröffentlichung |
|---|---|---|---|---|
| US 3807003 A | 30-04-1974 | KEINE | | |
| EP 0779463 A | 18-06-1997 | CH | 689039 A | 14-08-1998 |
| | | NO | 965308 A | 13-06-1997 |
| US 5842725 A | 01-12-1998 | CA | 2188203 A | 20-04-1997 |
| | | EP | 0769649 A | 23-04-1997 |
| US 2899733 A | 18-08-1959 | KEINE | | |
| EP 0787938 A | 06-08-1997 | US | 5711639 A | 27-01-1998 |
| | | AU | 720050 B | 25-05-2000 |
| | | AU | 1014597 A | 07-08-1997 |
| | | BR | 9700834 A | 03-11-1998 |
| | | NO | 970433 A | 04-08-1997 |
| US 2368929 A | 06-02-1945 | KEINE | | |

EPO FORM P0461

Für nähere Einzelheiten zu diesem Anhang : siehe Amtsblatt des Europäischen Patentamts, Nr.12/82